Europäisches Patentamt

European Patent Office

Office européen des brevets

(19)

(11) Veröffentlichungsnummer : **0 142 743**
**B1**

(12)

# EUROPÄISCHE PATENTSCHRIFT

(45) Veröffentlichungstag der Patentschrift :
02.03.88

(21) Anmeldenummer : 84112975.2

(22) Anmeldetag : 27.10.84

(51) Int. Cl.⁴ : **G 03 B 27/34, G 02 B 7/10**

(54) **Fotografisches Kopiergerät.**

(30) Priorität : 04.11.83 DE 3339960

(43) Veröffentlichungstag der Anmeldung :
29.05.85 Patentblatt 85/22

(45) Bekanntmachung des Hinweises auf die Patenterteilung : 02.03.88 Patentblatt 88/09

(84) Benannte Vertragsstaaten :
**CH DE GB LI**

(56) Entgegenhaltungen :
**EP-A- 0 075 854**
**DE-A- 2 917 176**
**DE-A- 3 107 075**
**US-A- 4 161 756**

(73) Patentinhaber : **Agfa-Gevaert AG**
**Patentabteilung**
**D-5090 Leverkusen 1 (DE)**

(72) Erfinder : **Nitsch, Wilhelm, Dr.**
**Werdenfelsstrasse 39**
**D-8000 München 70 (DE)**
Erfinder : **Kieslich, Walter, Dipl.-Ing.**
**Glückstrasse 2**
**D-8000 München 2 (DE)**
Erfinder : **Treiber, Helmut, Dr.**
**Bertelestrasse 67**
**D-8000 München 71 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 142 743 B1

**Beschreibung**

Die Erfindung betrifft ein fotografisches Kopiergerät nach dem Oberbegriff des Anspruchs 1.

Aus der deutschen Auslegeschrift 29 17 176 ist ein Reproduktionsobjektiv der eingangs beschriebenen Art bekannt, bei dem ein Rechner die dem Abbildungsmaßstab zugeordneten Soll-Positionswerte des Objektivs und der optischen Glieder jeweils aufgrund von dem Objektiv zugeordneten Koeffizienten, die in einem Speicher abgespeichert sind, errechnet. Ferner soll bei der einmaligen Eingabe der zu speichernden Koeffizienten die Berücksichtigung von Korrekturwerten des Objektivs möglich sein.

Bei dem bekannten Reproduktionsobjektiv ergeben sich die Soll-Positionen der einzelnen Objektivbaugruppen als Polynom, bei dem unterschiedliche Koeffizienten mit den Potenzen des Abbildungsmaßstabes zu multiplizieren sind. Diese Bauform bietet zwar die Möglichkeit, mit einer verhältnismäßig geringen Speicherkapazität auszukommen, jedoch ist der Aufwand für den Rechner höher. Außerdem sind die Möglichkeiten zur Berücksichtigung von Korrekturen sehr beschränkt.

Aufgabe der vorliegenden Erfindung ist es, neben den durch die Exemplarstreuung bei der Objektivherstellung erforderlichen Korrekturen zusätzliche Korrekturmöglichkeiten zu schaffen, ohne die Handhabung und den Service des Gerätes zu erschweren.

Diese Aufgabe wird gelöst durch die im beiligenden Anspruch 1 beschriebene Erfindung.

Durch die Verwendung zweier Speicher, von denen der eine die rein objektivbedingten Daten enthält, während der andere geräteseitige und benutzerspezifische Korrekturwerte aufnehmen kann, können z. B. benutzerspezifische Korrekturwerte ohne weiteres noch eingegeben und bei der Berechnung der Soll-Positionen berücksichtigt werden. Auch ist ein Auswechseln des Objektivbausteins zusammen mit dem ersten Speicher möglich, ohne daß dabei eine Überprüfung der im zweiten Speicher enthaltenen Werte zusammen mit einem neuen Objektiv erforderlich würde.

Weitere Einzelheiten und Vorteile der Erfindung ergeben sich aus den Unteransprüchen im Zusammenhang mit der Beschreibung eines Ausführungsbeispiels, das im folgenden anhand der Zeichnung eingehend beschrieben ist. Es zeigen

Figur 1 ein Objektiv für ein Kopiergerät für unterschiedliche Abbildungsmaßstäbe bei festem Abstand von Vorlagen- und Kopiermaterialebene,

Figur 2 ein Diagramm mit Kurven für die Verstellwege $S_1$, $S_2$ der Glieder des Objektivs nach Figur 1 bei unterschiedlichen Abbildungsmaßstäben,

Figur 3 ein Prinzipschaltbild einer Steuereinrichtung für die Verstellung des Objektivs nach Figur 1, und

Figur 4 ein Flußdiagramm für den Ablauf der Entscheidungen in der Steuervorrichtung gemäß Figur 3.

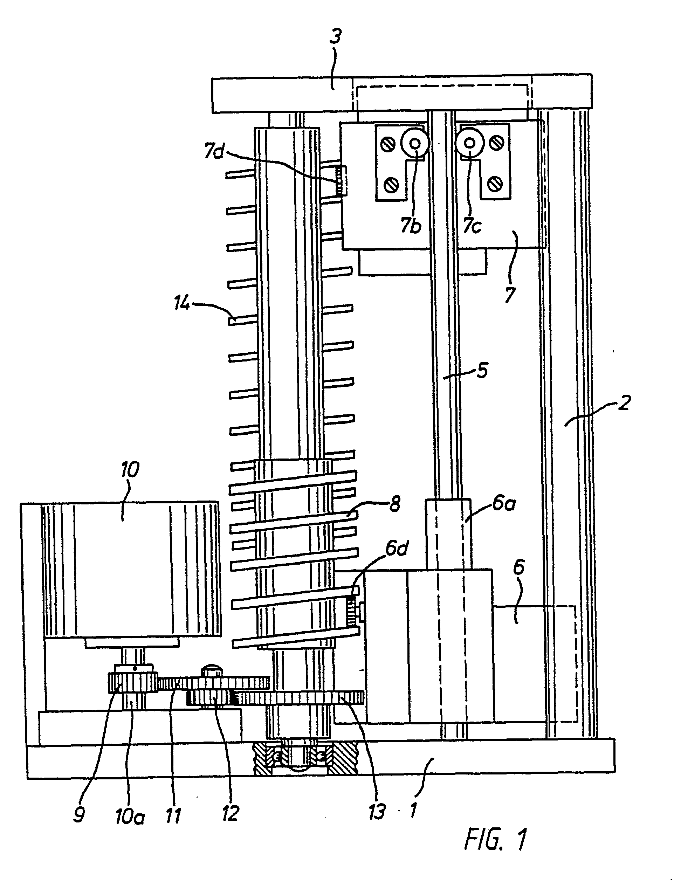

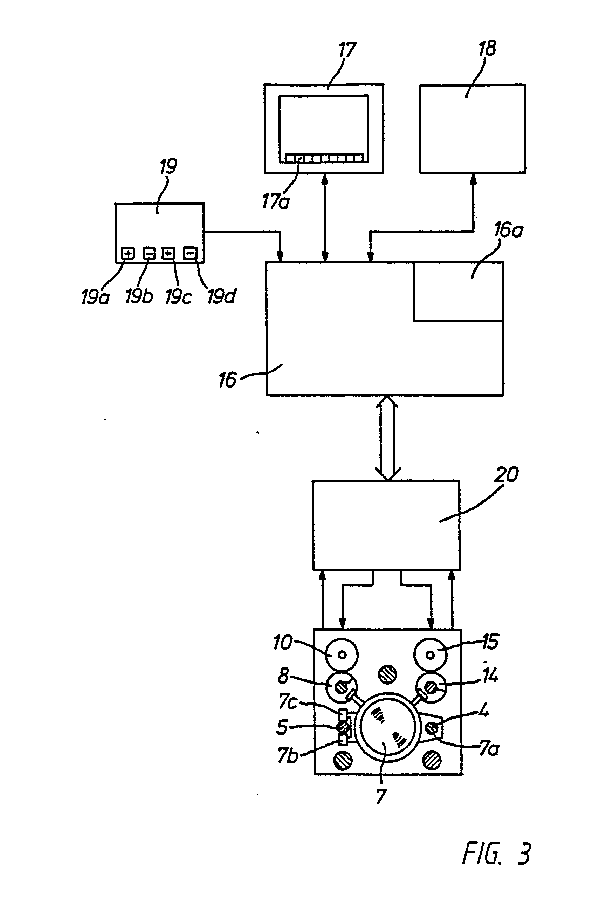

In Figur 1 ist mit 1 eine gestellfeste Platine bezeichnet, der durch Stehbolzen 2 verbunden eine weitere Platine 3 gegenüberliegt. Wie insbesondere auch aus dem Grundriß des Objektivs in Figur 3 entnehmbar ist, sind zwischen den beiden Platinen 1 und 3 Führungssäulen 4 und 5 befestigt, auf denen zwei Objektivglieder 6 und 7 einerseits mittels einer Langführung 6a, 7a, andererseits mit zweiseitig angreifenden Rollen 7b, 7c verschiebbar geführt sind.

Die Objektivglieder 6, 7 sind auf den Säulen 4, 5 spielfrei und reibungsarm bewegbar. Mit an den Gliedern 6, 7 befestigten Führungsrollen 6d bzw. 7d greifen sie in zwei Spindeln 8 bzw. 14 ein, die ebenfalls zwischen den Platinen 1 und 3 drehbar gelagert sind. Die in Figur 1 vorne liegende Spindel 8 ist über ein Untersetzungsgetriebe, bestehend aus einem Ritzel 9 auf der Welle 10a eines Schrittmotors 10, ein Zwischenrad 11, ein weiters Ritzel 12 und ein auf der Spindel befestigtes Zahnrad 13 angetrieben. Für die in Figur 1 hinten liegende Spindel 14 zum Antrieb des anderen Objektivgliedes ist ebenfalls ein Schrittmotor 15 mit entsprechendem Untersetzungsgetriebe vorgesehen.

Ferner ist am Wege der Spindeln jeweils ein nicht näher beschriebener Fühler vorgesehen, der die Rückkehr der Spindel in die Ausgangsstellung anzeigt.

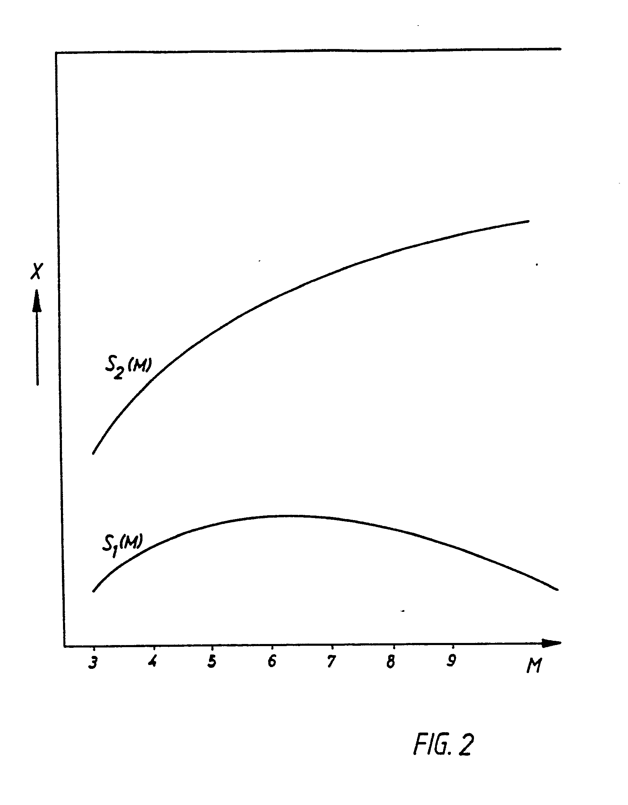

In Figur 2 sind Kurven $S_1$ und $S_2$ in Abhängigkeit von dem Abbildungsmaßstab M dargestellt, der zwischen 3 und 11 variieren kann. Die Kurve $S_1$ für das untere Glied 6 geht dabei von einem Ausgangswert über einen Maximalwert zurück zu nahezu demselben Ausgangswert, während die Kurve für das obere Glied 7 eine stetig steigende Parabelform aufweist.

Zur Steuerung der Schrittmotore 10 und 15 ist eine Schaltung gemäß Figur 3 vorgesehen. Diese enthält einen Mikroprozessor 16, z. B. einen Prozeßrechner der Firma Intel mit der Bezeichnung 8085 oder einen anderen Mikroprozessor mit wenigstens 8 Bit. An den Rechner 16 ist ein Terminal 17 angeschlossen, das eine Tastenreihe 17a, auch keyboard genannt, enthält. Ferner ist daran angeschlossen ein Laufwerk 18 für eine Magnetscheibe oder floppy disc, die im folgenden nur als zweiter Speicher 18 bezeichnet wird.

Der zweite, vom Benutzer noch nachprogrammierbare Speicher 18 enthält zwei Matrizen, von denen die eine Koordinate die zur Verarbeitung vorgesehenen Filmformate, die andere die möglichen Papierbreiten sind. In der ersten Matrix stehen in Zuordnung zu Filmformat und Papierbreite die allgemein üblichen Abbildungsmaßstäbe, die zweite Matrix ist zunächst leer.

Ferner ist an den Rechner 16 über eine entsprechende Leitung eine externe Eingabevorrichtung 19 mit vier Tasten angeschlossen, von denen die erste Taste 19a die Plustaste, die Taste 19b die Minustaste für den Abbildungsmaßstab M, die Taste 19c die Plustaste und die Taste 19d die Minustaste für die Schärfeeinstellung sind.

Am Rechner 16 ist ferner ein Prom 16a angeschlossen, das die Steuerkurven gemäß Figur 2 enthält, jedoch unter Berücksichtigung der jeweiligen individuellen Abweichung des Objektivs von dem theoretischen Wert. Der Rechner 16 steht in Verbindung mit der Steuerelektronik 20 für die Schrittmotoren 10 und 15. Sie enthält die Endstufen für die Steuerung der Schrittmotore ; daran sind auch die Leitungen von den Fühlern für die Erreichung der Endstellung angeschlossen.

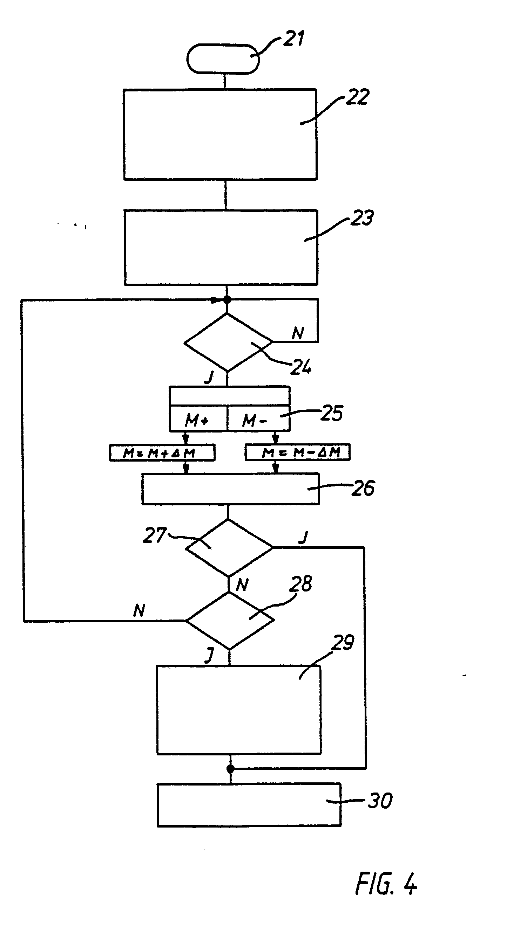

Der Funktionsablauf unter Benutzung des Schaltbildes gemäß Figur 3 ist in dem Flußdiagramm gemäß Figur 4 dargestellt.

Ein Gerätebenutzer hat häufig individuelle Wünsche zur Einstellung des Abbildungsmaßstabes an seinem Gerät. Das kann sich darauf beziehen, daß er zum Kopieren vorgelegte Kopiervorlagen möglichst weit bis zum Rand kopieren möchte, während andere Gerätebenutzer aus betrieblichen Gründen einen größeren Abbildungsmaßstab bevorzugen. So hat mittels der Einstellroutine « Variation der Vergrößerung » jeder Gerätebenutzer die Möglichkeit, seinen optimalen Abbildungsmaßstab zu ermitteln.

Nach dem Eingeben des Befehls « Variation der Vergrößerung » im keyboard 17a erfolgt der Start gemäß dem Feld 21. Entsprechend der bereits im Gerät vorgewählten Parameter Filmformat i und Papierbreite j wird gemäß Feld 22 eine konfigurationsabhängige Vergrößerung M aus dem Speicher 18 entnommen. Im Bildschirm des Terminals 17 wird danach eine Bildschirmmaske für diesen Programmteil aufgebaut. Ebenso werden die Lampenhausblende und der Verschluß geöffnet (siehe Feld 23).

In dieser Stellung der Einrichtung hat der Bediener nunmehr die Möglichkeit, die Objektiveinstellung zu überprüfen. Dazu bringt er in die Bildebene einen Einstellschirm und in die Vorlagenebene ein entsprechendes Negativ. Er kann nun überprüfen, ob der abgebildete Vorlagenbereich seinen Vorstellungen entspricht. Durch die Wahltaste am keyboard 17a sind die Tasten 19a, 19b in aktive Stellung gebracht. Die Tasten 19a-d sind in günstiger Position zu der zu betrachtenden Projektionsfläche angeordnet.

Wird die Taste 19a für eine Vergrößerung des Abbildungsmaßstabes kurz angetippt, so wird der Abbildungsmaßstab M um 0,01 oder je nach Eichung um 0,02 vergrößert, wobei sich gemäß den Kurven nach Figur 2 die Einstellwerte $S_1$ und $S_2$ verändern. Der Benutzer hat dann die Möglichkeit, wiederum zu überprüfen, ob der nunmehr eingestellte Abbildungsmaßstab mit seinen Vorstellungen übereinstimmt, oder ob er noch einige Schritte anhängen möchte. Für größere Verstellwege kann die Taste 19a auch auf Dauer gedrückt werden, wobei die Schritte dann in rascher Folge nacheinander ablaufen. Durch Drücken der Taste 19b wird die Bewegung in der entgegengesetzten Richtung durchgeführt.

Entspricht das Ergebnis den Erwartungen, so wird durch Drücken einer Taste « Store » im Tastenfeld 17a der nunmehr eingestellte Wert als benutzerspezifischer Wert bei dieser Kombination von Film- und Bildformat in die floppy disc 18 anstelle des bisherigen Wertes für M eingespeichert. Jedesmal beim Auftreten der bestimmten Kombination von Film- und Bildformat wird dann dieser benutzerindividuelle optimierte Wert für den Abbildungsmaßstab aus dem Speicher 18 entnommen.

Möchte der Benutzer aus diesem Programm aussteigen, betätigt er eine Taste im Tastenfeld 17a. Die Betätigung der Tasten 19a, b wird abgefragt im Feld 24 des Flußdiagramms, wobei das Nicht-Drücken von Tasten zu einem wiederholten Durchlaufen der Schleife führt bis zum Eingeben eines Tastendrucks 19a oder 19b. Diese werden im Feld 25 unterschieden nach positiv oder negativ, worauf mit den entsprechenden verbesserten Werten im Feld 26 die Einspeicherung in die floppy disc 18 vorgenommen wird. Danach erfolgen im Feld 27 Routinen über das Beenden des Einstellvorgangs, im Feld 28 die Abfrage, ob die Speichertaste im Tastenfeld 17a gedrückt ist. Das Feld 29 schließlich markiert die Einspeicherung des neuen Wertes in dem Speicher 18 an der Stelle des bisherigen Wertes, während im Feld 30 zum Abschluß des Programms der Verschluß wieder geschlossen und die Lampenhausblende geschlossen wird. Die Tasten 19 sind damit inaktiv.

Eine weitere Einstellgröße, die durchaus benutzerspezifisch sein kann, ist die Schärfeeinstellung. Je nach Feuchtigkeitsgehalt des Filmes neigt dieser in der Filmbühne zu einem Durchwölben, und es besteht die Möglichkeit, das Schärfemaximum mehr auf die durchgewölbte Vorlagenmitte oder auf eine ringförmige Zone zu legen, um die gesamte Vorlage mit einer bestmöglichen mittleren Schärfe wiederzugeben.

Für eine solche Variation der Schärfe besteht ebenfalls die Möglichkeit, ein entsprechendes Programm gemäß Flußdiagramm nach Fig. 4 am keyboard 17a aufzurufen und durch Druck der Tasten 19c, 19d die visuell optimal erscheinende Schärfe einzustellen. Zur Veränderung der Schärfe werden beide Einstellwerte $S_1$ und $S_2$ bei einem für ein bestimmtes Film- und Bildformat sich ergebenden Abbildungsmaßstab M parallel nach oben bzw. nach unten, je nach Wahl der Taste, verschoben.

Auch hier werden die als optimal empfundenen Werte im eingestellten Zustand durch Drücken der Speichertaste im Tastenfeld 17a in den Speicher 18 übernommen, wo sie in die leere zweite Matrix eingeschrieben werden.

Ferner ermöglicht der Rechner 16 bei entsprechender Programmierung eine Folge von Probebelichtungen von einer besonders zur Schärfebeurteilung geeigneten Vorlage. Dabei wird ausgehend von einem bestimmten Wert ($S_1$, $S_2$) jeweils nach einer parallelen Verschiebung beider Glieder 6 und 7 des Objektivs eine Kopie gemacht und dies für den wahrscheinlichen Schärfebereich z. B. sieben Mal wiederholt. Aufgrund der Beurteilung der Probekopien kann dann festgestellt werden, bei welcher Einstellung der optimale Wert (S'$_1$, S'$_2$) erreicht wird und diese Einstellung kann durch zunächst Drücken der Tasten 19c oder 19d eingestellt und dann durch Drücken der 17a in den Speicher 18 übernommen werden.

Schließlich wird bereits bei Anfertigung des Gerätes der Speicher 16a mit den theoretisch errechneten und den praktisch gemessenen Werten des Objektives gefüllt und zusammen mit dem Objektiv im Gerät eingebracht. In dem Speicher 18 sind außerdem bereits gerätebedingte Faktoren gespeichert, die ebenfalls bei der Einstellung des Objektives zu berücksichtigen sind. Dies sind z. B. innerhalb zulässiger Toleranzwerte liegende Verschiebungen der Vorlagenbühne oder der Papierbühne gegenüber dem Soll-Wert. Diese Abweichungen, deren Korrektur auf mechanischem Wege erhebliche Kosten verursachen würden, lassen sich auf diese Weise mit geringstem Aufwand bei der Bildung der Einstellwerte für die Schrittmotore 10 und 15 berücksichtigen.

Im praktischen Kopierbetrieb erfolgt die Einstellung so, daß für eine bestimmte Vorlagengröße und Papierbreite der zugehörige, individuell korrigierte Abbildungsmaßstab vom Rechner 16 aus der ersten Matrix des Speichers 18 entnommen wird. Zusätzlich entnimmt er dort die gerätebedingten Korrekturen und aus der zweiten Matrix die individuelle Schärfekorrektur. Gemäß den im Speicher 16a der gespeicherten Wertung der Kurven in Fig. 2 wird der korrigierte Abbildungsmaßstab in Schrittzahlen S$_1$ und S$_2$ der Schrittmotoren umgesetzt und Gerätekorrektur und individuelle Schärfekorrektur addiert. Zu Beginn des Einstellvorganges werden über die Steuerelektronik 20 die beiden Schrittmotore 10 und 15 auf ihren unteren Ausgangswert zurückgeführt. Diese so kombiniert vorgegebene Schrittzahl wird dann von den Schrittmotoren 10 und 15 ausgeführt, wodurch das Objektiv bereits den optimalen Abbildungsmaßstab und die optimale Schärfe erreicht hat.

Anstelle des Magnetscheibenspeichers 18 kann auch ein anderer Speicher mit langfristig haltbarem Inhalt vorgesehen sein, der jedoch vom Benutzer änderbar sein muß. Hierfür kommen z. B. noch folgende Speichertypen in Frage : EAROM, Batterie-gepuffertes RAM.

Die beiden in den verschiedenen Speichern 16a und 18 untergebrachten Wertegruppen könnten auch in organisatorisch getrennten Speicherplätzen eines gemeinsamen Speichers untergebracht sein ; dadurch geht allerdings ein Teil der beschriebenen Vorteile verloren.

**Patentansprüche**

1. Fotografisches Kopiergerät, dessen Vorlagen- und Kopiermaterialebenen in festem Abstand zueinander angeordnet sind, mit einem Objektiv, das zur Einstellung unterschiedlicher Maßstäbe M mittels einstellbarer Brennweite wenigstens zwei in Achsrichtung verstellbare Glieder (6, 7) aufweist, wobei zur Einstellung der beiden Glieder (6, 7) je ein Schrittmotor (10, 15) vorgesehen ist, die durch einen auch objektivspezifische Korrekturwerte des Objektivs berücksichtigenden Rechner gesteuert sind, der mit einem Speicher (16a) versehen ist, in dem für die Abbildungsmaßstäbe M die Steuerwerte für die Einstellung der optischen Glieder (6, 7) aufgrund der theoretisch errechneten Objektivdaten und der praktisch gemessenen Objektivdaten gespeichert sind, gekennzeichnet durch einen zweiten, nachprogrammierbaren Speicher (18), in dem andere, gerätespezifische Korrekturwerte oder vom Benutzer vorgebbare Einstellwerte gespeichert sind und der gemeinsam mit dem erstgenannten Speicher (16a) den Rechner (16) mit Daten zur Steuerung der Schrittmotore (10, 15) versorgt.

2. Kopiergerät nach Anspruch 1, dadurch gekennzeichnet, daß eine in Verbindung mit dem Rechner (16) stehende Steuerelektronik (20) zu Beginn eines Einstellvorganges die beiden optischen Glieder (6, 7) in die Ausgangsstellung zurückfährt und die Soll-Stellung immer in derselben Richtung anfährt.

3. Kopiergerät nach Anspruch 1, dadurch gekennzeichnet, daß der erstgenannte Speicher (16a) ein bei der Objektivherstellung fest programmiertes PROM ist, das zusammen mit dem Objektiv austauschbar ist.

4. Kopiergerät nach Anspruch 1, dadurch gekennzeichnet, daß der zweite Speicher (18) ein Magnetspeicher ist, der gerätebedingte, für die Objektiveinstellung wirksame Korrekturwerte, z. B. zur Kompensation der Abweichung der Lage der Vorlagenbühne oder der Papierbühne vom Sollwert, enthält.

5. Kopiergerät nach Anspruch 1 oder 4, dadurch gekennzeichnet, daß der zweite Speicher (18) vom Gerätebenutzer über ein Tastenfeld (19a-d) mit kundenspezifisch optimierten Einstellwerten für die Schärfe oder den Abbildungsmaßstab programmierbar ist.

6. Fotografisches Kopiergerät nach einem der vorhergehenden Ansprüche, dadurch gekennzeichnet, daß der Rechner (16) programmiert ist für den automatischen Ablauf einer Folge von Belichtungen einer Vorlage mit inkremental unterschiedlicher Schärfeeinstellung zur visuellen Beurteilung des Optimalwertes.

**Claims**

1. Photographic copying apparatus in which the plane of the original and the plane of the copying material are arranged at a fixed distance from each other and which has a lens which has at least two elements (6, 7) which can be adjusted in an axial direction for the setting of various scales M by means of an adjustable focal length, one step motor (10, 15) being provided for the adjustment of each of the two elements (6, 7), which step motors are controlled by a computer which also takes into account lens-specific correction values of the lens, which computer is provided with a memory (16a) in which the control values for the reproduction scales M for the adjustment of the optical elements (6, 7) on the basis of the theoretically calculated lens data and the actually measured lens data are stored, characterised by a second, subsequently programmable memory (18) in which other apparatus-specific correction values or adjustment values presettable by the user are stored and which, together with the first-mentioned memory (16a), supplies the computer (16) with data for controlling the step motors (10, 15).

2. Copying apparatus according to Claim 1, characterised in that a control electronic system (20) connected to the computer (16) returns the two optical elements (6, 7) to their original position at the beginning of an adjustment process and always advances the reference position in the same direction.

3. Copying apparatus according to Claim 1, characterized in that the first-mentioned memory (16a) is a PROM which has been fixedly programmed during the production of the lens and which can be replaced together with the lens.

4. Copying apparatus according to Claim 1, characterised in that the second memory (18) is a magnetic memory which contains apparatus-dependent correction values effective for the adjustment of the lens, for example for compensating the deviation of the position of the platform for the original or of the platform for the paper from the reference value.

5. Copying apparatus according to Claim 1 or 4, characterised in that the second memory (18) can be programmed by the user of the apparatus by means of a keyboard (19a-d) with adjustment values for the sharpness or the scale of reproduction which are optimised with respect to the specific customer.

6. Photographic copying apparatus according to one of the preceding claims, characterised in that the computer (16) is programmed for the automatic run-off of a series of exposures of an original with an incrementally differing adjustment of the sharpness for a visual assessment of the optimum value.

**Revendications**

1. Duplicateur photographique, dont les plans de l'original et de la copie sont situés l'un par rapport à l'autre à une distance fixe, comportant un objectif qui présente au moins deux éléments (6, 7) réglables en direction axiale pour la mise au point des différentes échelles M au moyen d'une distance focale variable, un moteur pas à pas (10, 15) étant prévu pour le réglage de chacun des deux éléments (6, 7), les moteurs étant commandés par un calculateur faisant intervenir aussi des valeurs de correction spécifiques de l'objectif, le calculateur étant équipé d'une mémoire (16a) dans laquelle, pour les échelles de reproduction M, les valeurs de commande sont mémorisées pour le réglage des éléments optiques (6, 7) en fonction des données de l'objectif calculées théoriquement et des données de l'objectif mesurées pratiquement, caractérisé par une deuxième mémoire (18) programmable ultérieurement, dans laquelle sont mémorisées d'autres valeurs de correction spécifiques à l'appareil ou des valeurs de réglage prédéfinissables par l'opérateur et qui, en commun avec la première mémoire citée (16a), alimente le calculateur (16) en données pour la commande des moteurs pas à pas (10, 15).

2. Duplicateur photographique selon la revendication 1, caractérisé en ce qu'une électronique de commande (20) en liaison avec le calculateur (16) fait revenir, au début d'un processus de réglage, les deux éléments optiques (6, 7) en position initiale et conduit à la position demandée toujours dans le même sens.

3. Duplicateur photographique selon la revendication 1, caractérisé en ce que la première mémoire citée (16a) est une mémoire PROM, programmée de manière fixe lors de la fabrication de l'objectif, et échangeable en même temps que l'objectif.

4. Duplicateur photographique selon la revendication 1, caractérisé en ce que la deuxième mémoire (18) est une mémoire magnétique, qui contient des valeurs de correction propres à l'appareil, destinées au réglage de l'objectif, par exemple pour la compensation de l'écart, par rapport à la consigne, de la position du porte-original ou du porte-papier.

5. Duplicateur photographique selon la revendication 1 ou 4, caractérisé en ce que la deuxième mémoire (18) est programmable par l'opérateur par l'intermédiaire d'un clavier (19a-d) avec des valeurs de réglage spécifiquement optimisées pour la netteté ou l'échelle de reproduction.

6. Duplicateur photographique selon l'une des revendications précédentes, caractérisé en ce que le calculateur (16) est programmé pour le déroulement automatique d'une séquence d'expositions d'un original avec une mise au point incrémentielle différenciée pour l'évaluation visuelle de la valeur optimale.

FIG. 1

FIG. 2

FIG. 3

FIG. 4